# EUROPEAN PATENT APPLICATION

(11) **EP 4 681 907 A1**
(43) Date of publication of application: **21.01.2026**
(21) Application number: 25190120.3
(22) Date of filing: 17.07.2025
(51) Int. Cl.: B29C 64/124, B29C 64/182, B29C 64/232, B29C 64/236, B29C 64/264, B29C 64/393, B33Y 10/00, B33Y 30/00, B33Y 50/02

(54) **THREE DIMENSIONAL PRINTING SYSTEM WITH INTERLACED OPERATION THAT ALTERNATES FORMING LAYERS BETWEEN PLURAL BUILD PLANES**

(30) Priority: 19.07.2024 US 202463673460 P
(71) Applicant: 3D Systems, Inc., Rock Hill, SC 29730 (US)
(72) Inventor: Astle, Seth, Berkeley, California (CA) (US); Sivaprasad, Akarsh, Nashua, New Hampshire (NH) (US); Manners, Chris Robert, Moorpark, California (CA) (US)
(74) Representative: dompatent

(57) **Abstract**

A 3D printing system includes a first build platform, a second build platform, a light engine, and a controller. The first build platform contains photocurable resin between a first build surface and a first transparent wall. A first build plane is defined along the first transparent wall. The second build platform contains photocurable resin between a second build surface and a second transparent wall. A second build plane is defined along the second transparent wall. The controller is programmed to: operate the light engine to selectively irradiate the first build plane; translate the light engine to the second mechanical platform; operate the light engine to selectively irradiate the second build plane; translate the light engine back to the first mechanical platform; repeat operating and translating the light engine to alternately accrete photocurable resin at the first and second build surfaces.

## Description

### Cross-Reference to Related Applications

This non-provisional patent application claims priority to U.S. Provisional Application Serial Number 63/673,460, Entitled "Three Dimensional Printing System with Interlaced Operation that Alternates Forming Layers Between Plural Build Planes" by Seth Astle et al., filed on July 19, 2024, incorporated herein by reference under the benefit of U.S.C. 119(e).

### Field of the Invention

The present disclosure concerns an apparatus and method for fabrication of solid three dimensional (3D) articles of manufacture from radiation curable (i.e., photocurable) resins. More particularly, the present disclosure concerns a system enabling higher productivity when utilizing high viscosity photocurable resins.

### Background

Three dimensional (3D) printers are in rapidly increasing use for manufacturing customized articles. One class of 3D printers includes stereolithographic-type printers having a general principle of operation including the selective curing and hardening of radiation curable (i.e., photocurable) liquid resins. One type of stereolithography system includes a build vessel holding the photocurable resin, a movement mechanism coupled to a build plate, and a light engine. The stereolithographic system forms a three dimensional (3D) article of manufacture by selectively and sequentially curing layers of the photocurable resin over a surface or lower surface of a build plate. Layers are added over a "face" or "lower face" of the partially formed 3D article.

The build vessel has a transparent wall that forms a lower bound for the photocurable resin and is above the light engine. To form a new layer, 3D printer moves the lower face to a build plane that is just above the transparent wall. The light engine then selectively irradiates the build plane, thereby accreting a new layer of the 3D article onto the lower face.

One challenge is that the formation of the layer tends to deplete a volumetric slab of resin between the lower face and the transparent wall. To replenish the volumetric slab, the build surface is raised by more than a layer thickness and then lowered to the build plane. This raising and lowering is time consuming, particularly for higher viscosity resins. There is an ongoing need to find solutions that increase productivity of such systems.

### Summary

In a first aspect of the disclosure a three-dimensional (3D) printing system is configured to manufacture at least first and second 3D articles. The 3D printing system includes a plurality of mechanical print platforms, a light engine, and a controller.

The plurality of mechanical print platforms are arranged along a lateral Y-axis and include a first build platform and a second build platform. The first build platform contains photocurable resin between a first build surface and a first transparent wall. A first build plane is defined along the first transparent wall. The second build platform contains photocurable resin between a second build surface and a second transparent wall. A second build plane is defined along the second transparent wall.

The controller is programmed to perform the following steps: operate the light engine to selectively irradiate the first build plane and to selectively accrete the photocurable resin onto the first build surface; translate the light engine along the Y-axis to the second mechanical platform; operate the light engine to selectively irradiate the second build plane and to selectively accrete the photocurable resin onto the second build surface; translate the light engine along the Y-axis back to the first mechanical platform; repeat operating and translating the light engine to alternately accrete photocurable resin at the first and second build surfaces until the first and second 3D articles are fully fabricated.

The process of alternating layer formation between first and second build planes enhances productivity of the light engine. While irradiation and layer accretion is occurring at one build platform, the other build platform is undergoing vertical translation of the build surface to replenish resin. This is particularly advantageous for processing high viscosity resins.

In one implementation or embodiment, the 3D printing system includes a third build platform containing a photocurable resin between a third build surface and a third transparent wall. A third build plane is defined along the third transparent wall. The controller is further programmed to perform the following after operating the light engine to selectively irradiate the second build plane but before translating the light engine back to the first mechanical platform: translate the light engine from the second mechanical platform to the third mechanical platform; operate the light engine to selectively irradiate the third build plane and to selectively accrete the photocurable resin onto the third build surface.

In another implementation or embodiment the controller is programmed to vertically translate the second build surface toward the second build plane concurrent with operating the light engine to selectively irradiate the first build plane.

In yet another implementation or embodiment the controller is programmed to vertically translate the first build surface upward and then downward to replenish photocurable resin along the first build surface after operating the light engine to selectively irradiate the first build plane.

In a further implementation or embodiment the 3D printing system includes a build vessel having lower bounds for the photocurable resin defined by the first transparent wall and the second transparent wall laterally separated and arranged along the Y-axis.

In a second aspect of the disclosure a three-dimensional (3D) printing system is configured to manufacture at least first and second 3D articles. The 3D printing system includes a first build platform, a second build platform, a light engine coupled to a lateral movement mechanism, and a controller.

The first build platform includes a first build plate coupled to a first vertical movement mechanism and a first transparent wall positioned below the first build plate. A first build surface is defined by a lower face of the first build plate or the first 3D article. A first build plane is defined above the first transparent wall.

The second build platform includes a second build plate coupled to a second vertical movement mechanism and a second transparent wall positioned below the second build plate. A second build surface is defined by a lower face of the second build plate or the second 3D article. A second build plane is defined above the second transparent wall.

The controller is programmed to: with the light engine positioned below the first build platform, operate the light engine to selectively irradiate the first build plane; operate the lateral movement mechanism to translate the light engine to a position below the second build platform; operate the light engine to selectively irradiate the second build plane; repeat operating the light engine and the lateral movement mechanism to alternately selectively irradiate the first and second build planes until the first and second 3D articles are fully fabricated; concurrent with operating the light engine to selectively irradiate the first build plane, operating the second vertical movement mechanism to vertically translate the second build platform.

In a third aspect of the disclosure a three-dimensional (3D) printing system is configured to manufacture first, second, and third 3D articles. The 3D printing system includes a first build platform, a second build platform, a third build platform, a light engine coupled to a lateral movement mechanism, and a controller.

The first build platform includes a first build plate coupled to a first vertical movement mechanism and a first transparent wall positioned below the first build plate. A first build surface is defined by a lower face of the first build plate or the first 3D article. A first build plane is defined above the first transparent wall.

The second build platform includes a second build plate coupled to a second vertical movement mechanism and a second transparent wall positioned below the second build plate. A second build surface is defined by a lower face of the second build plate or the second 3D article. A second build plane is defined above the second transparent wall.

The third build platform includes a third build plate coupled to a third vertical movement mechanism and a third transparent wall positioned below the third build plate. A third build surface is defined by a lower face of the third build plate or the third 3D article. A third build plane is defined above the third transparent wall.

The controller is programmed to: with the light engine positioned below the first build platform, operate the light engine to selectively irradiate the first build plane; operate the lateral movement mechanism to translate the light engine to a position below the second build platform; operate the light engine to selectively irradiate the second build plane; operate the lateral movement mechanism to translate the light engine to a position below the third build platform; operate the light engine to selectively irradiate the third build plane; repeat operating the light engine and the lateral movement mechanism to alternately selectively irradiate the first, second, and third build planes until the first, second, and third 3D articles are fully fabricated.

### Brief Description of the Figures

FIG. 1 is an isometric drawing of a three-dimensional (3D) printing system within a housing and a 3D article that is fabricated by the 3D printing system.
FIG. 2 is an isometric drawing of a three-dimensional (3D) printing system with a housing removed.
FIG. 3 is an isometric drawing of a lower portion of a three-dimensional (3D) printing system with a housing removed.
FIG. 4 is an isometric drawing of an upper portion of a three-dimensional (3D) printing system with a housing removed with a perspective of looking obliquely down at upper surfaces of the upper portion.
FIG. 5 is an isometric drawing of an upper portion of a three-dimensional (3D) printing system with a housing removed with a perspective of looking obliquely up at lower surfaces of the upper portion.
FIG. 6 is an isometric drawing of a build vessel.
FIG. 7 is a top plan view of a build vessel.
FIG. 8 is an electrical block diagram of a 3D printing system.
FIG. 9 is a flowchart of a method of operating a 3D printing system.
FIG. 10 is a timing diagram for a 3D printing system.

### Detailed Description of the Preferred Embodiments

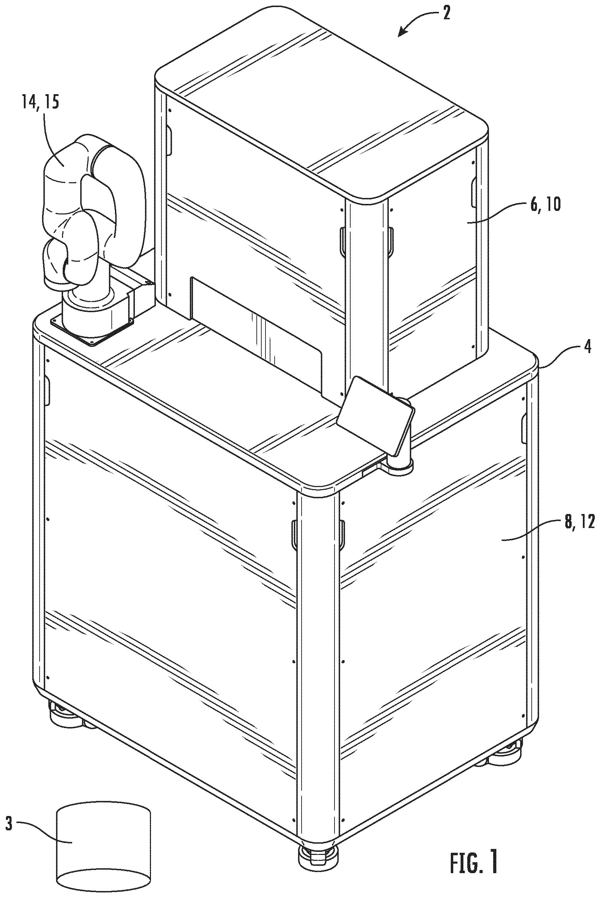

FIG. 1 is an isometric drawing depicting an embodiment of three-dimensional (3D) printing system 2 configured to manufacture a three-dimensional (3D) article 3. In describing 3D system 2, mutually perpendicular axes X, Y, and Z will be used. Axes X and Y are generally horizontal or lateral axes. Axis Z is a vertical axis that is generally aligned with a gravitational reference. In using the word "generally" it is implied that a limitation that is "generally" true is by design but to within manufacturing tolerances. Additionally angular axes theta-X, theta-Y, and theta-Z are rotations about the X, Y, and Z axes respectively. In the figures that follow, like element numbers indicate like elements although the same element number may be used for different embodiments or implementations of the same element. The specific embodiments and applications thereof described above are for illustrative purposes only and do not preclude modifications and variations encompassed by the scope of the following claims.

3D printing system 2 is at least partially enclosed within an outer housing 4 which houses an upper portion 6 and a lower portion 8 of 3D printing system 2. The upper portion 6 contains a plurality of mechanical print platforms 10. The lower portion 8 contains a light engine 12 and other components. Optionally, the 3D printing system 2 can include automated plate handling hardware 14 which can include hardware such as robotic handling hardware 15 (illustrated in FIG. 1) and plate extractors (illustrated infra).

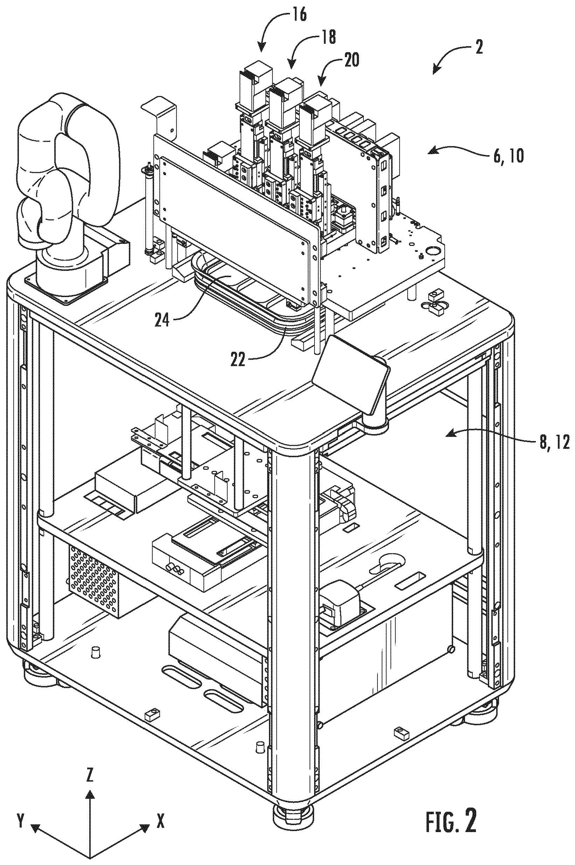

FIG. 2 is an isometric drawing of 3D printing system 2 with housing 4 (FIG. 1) removed. Remaining figures will no longer include housing 4. The upper portion 6 includes mechanical print platforms 10. The mechanical print platforms 10 includes a first build platform 16, a second build platform 18, and a third build platform 20 to be described in more detail infra. The mechanical print platforms 10 include a build vessel 22 containing a photocurable resin 24. The lower portion 8 contains light engine 12 as well as other components such as a controller and power supply.

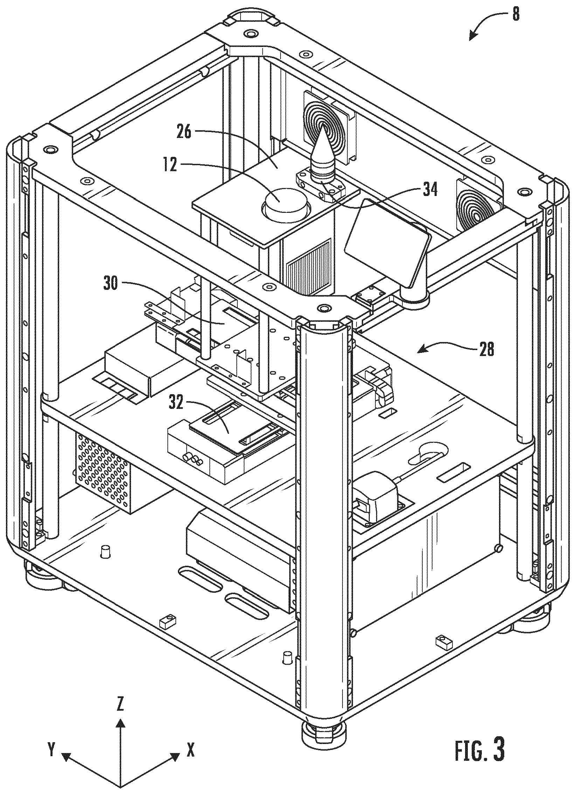

FIG. 3 is an isometric drawing of the lower portion 8 of the 3D printing system 2. The light engine 12 can also be referred to as an imager 12. In an illustrative embodiment, the light engine 12 includes a projection light engine 12. The projection light engine 12 includes a light source, a spatial light modulator, and projection optics. The light source includes a plurality of light emitting diodes that generate radiation in a wavelength range of blue to ultraviolet (or typically in a range within 100 to 500 nm). The spatial light modulator includes an array of switchable micro-mirrors on a chip. The micro-mirrors can be actuated to turn individual pixels on and off - controllably deflecting light either to a build plane or a light trap. The projection optics focus the pixels upon the build plane. Such a projection light engine 12 is known in the art for stereolithography. Light engines known in the art for stereolithography can employ other components including ultraviolet lasers, steering optics, galvanometer-actuated steering mirrors, and linear arrays of ultraviolet light emitting diodes.

The light engine 12 is mounted to a carriage 26 which in turn is mechanically coupled to a lateral movement mechanism 28. In the illustrated embodiment, the lateral movement mechanism 28 is configured to accurately move along the X-axis and the Y-axis by the action of linear stepper movers 30, 32. The linear stepper movers include an X-mover 30 and a Y-mover 32 configured to position the carriage 26 along X and Y respectively.

Because movers 30 and 32 operate upon the same principles, just the Y-mover 32 will now be described. The Y-mover includes a linear bearing that constrains motion of the carriage 26 to motion along the Y-axis. The Y-mover includes a Y-motor coupled to a precision lead screw or gear train mechanism. In the case of the precision lead screw mechanism, the motor turns a lead screw whose outer threads engage inner threads of a nut. The motor turning the lead screw inside the nut imparts linear motion of the carriage coupled to a portion of the Y-mover along the Y-axis. Movers that utilize stepper motors and lead screws or gear trains are well known in fields requiring precision motion including 3D printing.

Also mounted to the carriage 26 is a vertical distance sensor 34. The vertical distance sensor 34 is configured to output a signal indicative of a distance between the sensor 34 and a planar surface above the sensor 34. In an illustrative embodiment, sensor 34 is a confocal distance sensor 34. Confocal distance sensors 34 can be configured to utilize monochromatic or polychromatic light and are well known in the art for high accuracy distance measurements. As a first alternative embodiment, the sensors 34 can be distance sensors based upon lasers. Some direct a beam at a small oblique angle relative to a surface normal and receive the beam with a line of sensors. The principle of triangulation is used to determine distance. As a second alternative, the sensors 34 can operate based upon interferometry in which emitted and reflected light from a laser generates an interference pattern based upon a distance. All such sensors are known in the art for precision distance measurement.

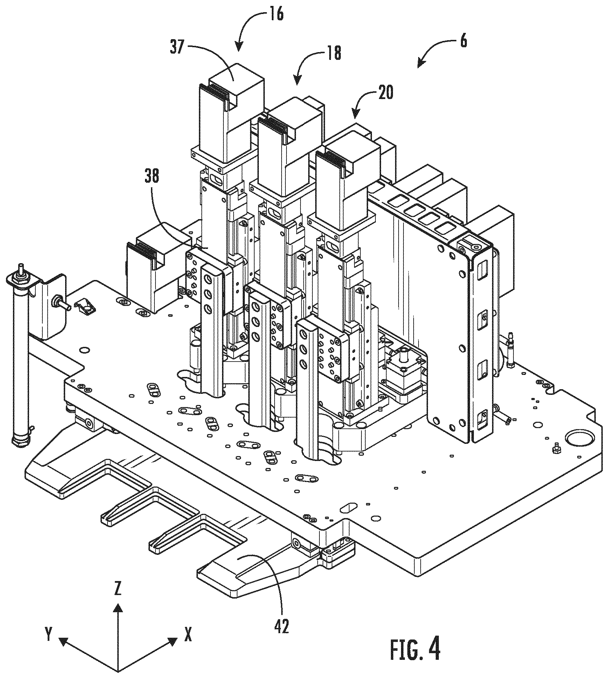

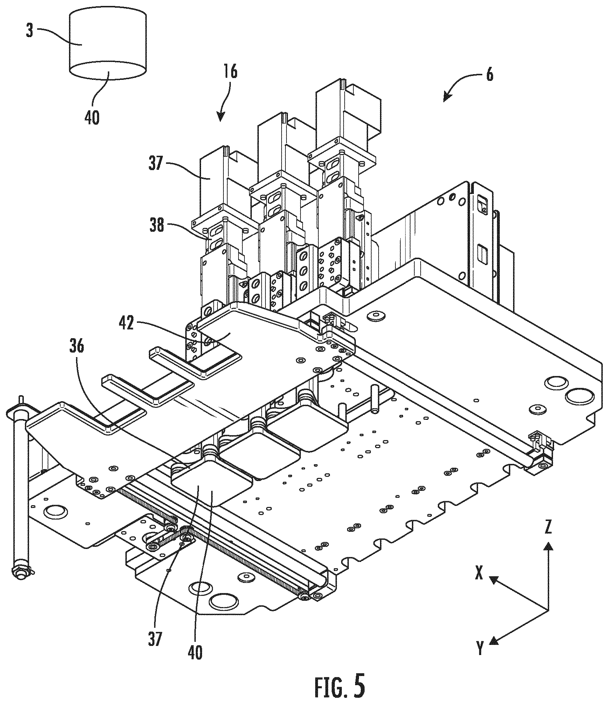

FIGS. 4 and 5 are is isometric drawings of the upper portion 6 of 3D printing system 2 but without the build vessel 22. FIGS. 4 and 5 are looking obliquely down (FIG. 4) and obliquely up (FIG. 5) toward the upper portion 6 in order to illustrate details of build platforms 16, 18, and 20 which are linearly arranged along the lateral Y-axis. Build platforms 16, 18, and 20 are similar or identical to each other and individually include the same components. Therefore, elements of build platform 16 will now be described and such description will also apply to remaining build platforms 18 and 20.

Build platform 16 includes a build plate 36 that is releasably coupled to a vertical movement mechanism 38. An embodiment of the vertical movement mechanism 38 includes a motorized ball bearing screw mechanism or otherwise referred to as a ball screw mechanism. A ball screw mechanism includes a vertical screw shaft that passes through a ball nut. The ball nut contains recirculating steel balls and translates vertically. The vertical screw shaft has helical channels that engage the recirculating balls. The ball nut is mechanically coupled to the build plate 36. A motor 37 is coupled to the vertical screw shaft and is configured to selectively rotate the vertical screw shaft. As the vertical screw shaft rotates, the action of the vertical screw shaft upon the ball nut translates the elevator upward and downward depending on a direction of rotation. Such translation mechanisms are known in the art for precision positioning along vertical, horizontal, and oblique axes. Other embodiments are possible such as a lead screw and nut system or a rack and pinion mechanism or a motorized belt/pulley system and are all known in the art for linearly translating components along various axes.

The build plate 36 defines a lower surface 37. A build surface 40 is defined as a surface upon which a layer of the photocurable resin 24 will be selectively cured. Thus, during fabrication of a 3D article 3, the lower surface 37 of build plate 36 is initially the build surface 40. However, as layers of the 3D article 3 accrete onto lower surface 37, the build surface 40 incrementally moves down from surface 37 in a layer by layer manner. This definition of build surface 40 will be a part of the ongoing description and claims. The build surface 40 can also be referred to as a lower face 40. The terms lower face 40 and build surface 40 are interchangeable within the context of the disclosure. However, for some systems, a build surface 40 can be facing downward or upward whereas a lower face 40 faces downward.

The upper portion 6 also includes an extractor 42 which is part of the automated plate handling system 14. Extractor 42 can be used to remove and replace the build plates 36 from the build platforms 16, 18, and 20. Thus, build plates 36 are automatically handled by plate handling system 14 which includes robotic plate handler 15 (FIG. 1) and extractor 42.

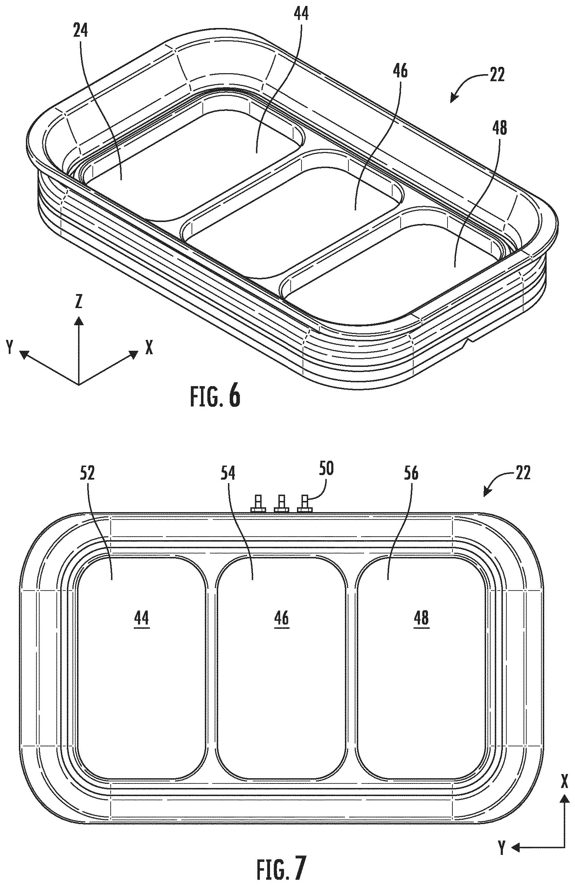

FIGS. 6 and 7 are isometric and top views of the build vessel 22 respectively. In the illustrated embodiment, build vessel 22 includes three horizontal transparent walls 44, 46, and 48 corresponding to and included with the three build platforms 16, 18, and 20 respectively. Thus, like the build platforms 16, 18, and 20, the transparent walls 44, 46, and 48 are arrayed along the Y-axis. The transparent wall 44 corresponding to build platform 16 will now be described with such description also applying to remaining transparent walls 46 and 48.

The transparent wall 44 includes a rigid transparent plate that underlies a flexible transparent sheet. The term "transparent" indicates transparency for optical wavelengths between blue and ultraviolet (UV) or a range of 500 (blue) to 100 (ultraviolet) nanometers (nm). The transparent plate can be formed from glass, quartz, or a transparent plastic material, to name some examples. The build vessel 22 includes a conduit coupled to a space between the transparent plate and the transparent sheet. This conduit can be used to pressurize the transparent sheet to replenish oxygen or air within the transparent sheet. The oxygen acts as an inhibitor that diffuses through the transparent sheet, preventing photocurable resin 24 from hardening upon an upper surface of the transparent sheet. The transparent sheet is formed from a flexible and transparent sheet material such as a fluoropolymer that is transmissible to oxygen. Such transparent sheet materials are known in the art for stereolithography.

A build plane 52 is defined above the transparent wall 44. The build plane 52 is laterally bound by the transparent wall 44 and vertically determined by a focus of the light engine 12, photocurable resin 24 composition, diffusion rate of oxygen through the transparent sheet, and possibly other factors. Generally, the build plane 52 is vertically within one millimeter of the transparent wall 44 and perhaps much closer such as within 0.1 millimeter.

In the illustrated embodiment, the transparent walls 44, 46, and 48 form three separate build planes 52, 54, and 56 respectively that are spatially separated and arranged along the Y-axis. In the illustrated embodiment, a single build vessel 22 contains photocurable resin 24 above all three transparent walls 44, 46, and 48. However, in an alternative embodiment, the photocurable resin can be contained in three separate build vessels 24 that individually only include one of the transparent walls 44, 46, and 48.

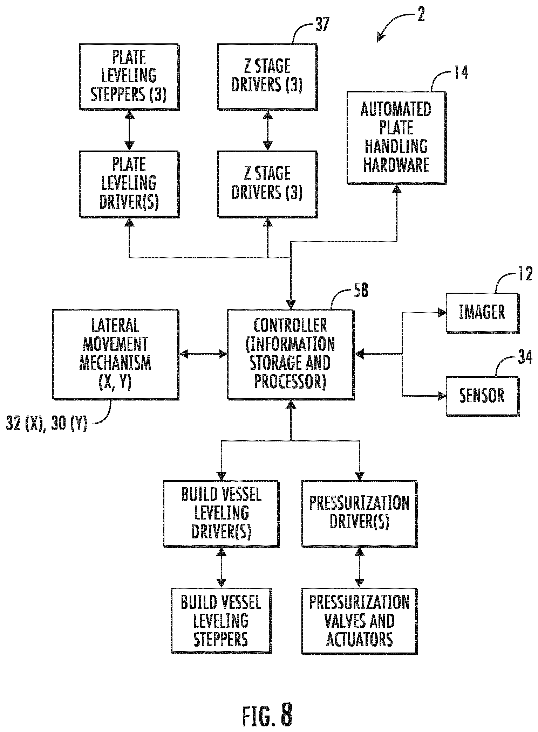

FIG. 8 is an electrical block diagram of the 3D printing system 2. A controller 58 is coupled to various components including some of those discussed supra. Controller 58 includes a processor coupled to information storage. The information storage is non-volatile or non-transient and stores software instructions. When the software instructions are executed by the processor, the components are individually and/or collectively monitored and/or controlled. The controller can be a single module co-located within the 3D printing system housing 4 and/or include modules, computers, and/or servers that are spaced or remote from housing 4. Controllers including processors and storage subsystems are well known in the art for control of electromechanical systems.

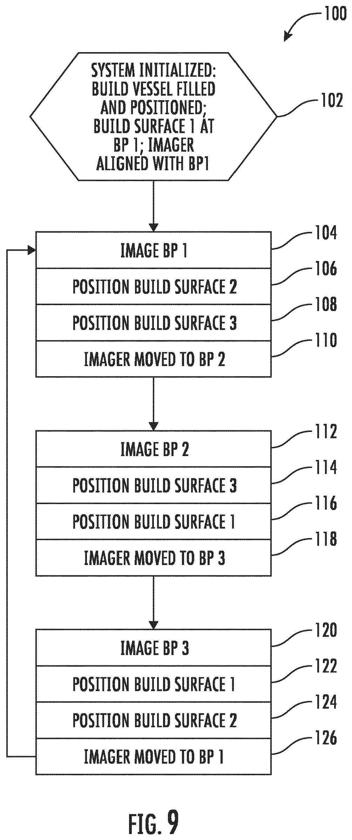

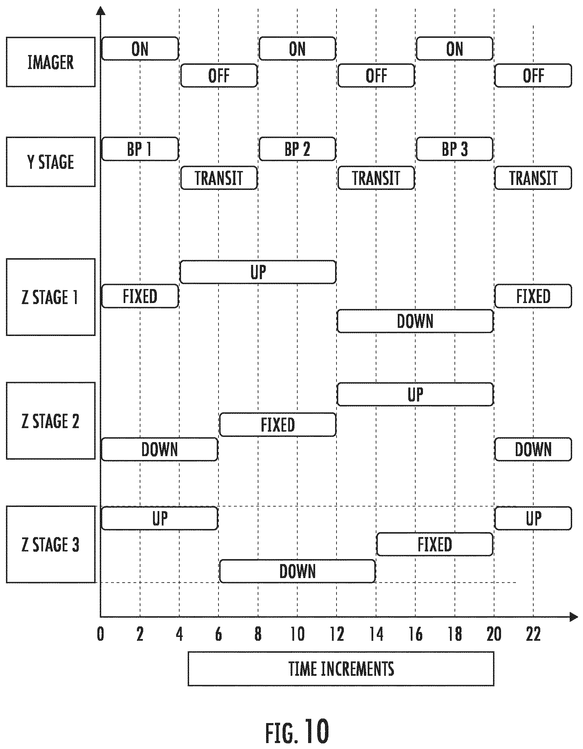

FIG. 9 is a flowchart depicting a method 100 of manufacturing a plurality of 3D articles 3 on three different build surfaces including build surfaces 1, 2, and 3. In considering FIGS. 9 and 10, there is a correspondence between simplified labels and earlier figures. Build platform 1, motor 1, build surface 1, build plane 1, and transparent wall 1 are laterally aligned with and correspond to the build platform 16 of FIGS. 2 and 4 as well as with transparent wall 44 and build plane 52 of FIG. 7. Build platform 2, build surface 2, build plane 2, and transparent wall 2 are laterally aligned with and correspond to the build platform 18 of FIGS. 2 and 4 as well as with transparent wall 46 and build plane 54 of FIG. 7. Build platform 3, build surface 3, build plane 3, and transparent wall 3 are laterally aligned with and correspond to the build platform 20 of FIGS. 2 and 4 as well as with transparent wall 48 and build plane 56 of FIG. 7. This simplification of labels is more convenient when considering the operation of 3D printing system 2.

In alternative language, build platform 1, motor 1, build surface 1, build plane 1, and transparent wall 1 can be referred to as a first build platform, a first motor, a first build surface, a first build plane, and a first transparent wall respectively. Build platform 2, motor 2, build surface 2, build plane 2, and transparent wall 2 can be referred to as a second build platform, a second motor, a second build surface, a second build plane, and a second transparent wall respectively. Build platform 3, motor 3, build surface 3, build plane 3, and transparent wall 3 can be referred to as a third build platform, a third motor, a third build surface, a third build plane, and a third transparent wall respectively.

In FIG. 9, certain steps are grouped together because there is at least a partial concurrence or temporal overlap between certain steps. For example, steps 104-110 are grouped, steps 112-118 are grouped, and 120-126 are grouped. However, this grouping can vary and is partially intended to illustrate that there is a concurrence between certain steps.

The steps of method 100 can be performed automatically by the controller 58. The controller 58 processor executes software instructions stored on the controller 58 information storage to perform step 102 and repeatedly perform steps 104-126. Thus, we say that controller 58 is programmed to perform the steps of method 100.

See FIG. 10 for a timing diagram that corresponds to steps 104-126. The horizontal axis illustrates time increments (that can be seconds, partial seconds, or multiple seconds). The vertical axis indicates various components of the 3D printing system 2. The "IMAGER" is the light engine 12. The light engine 12 being "ON" is the time during which the light engine 12 is selectively irradiating a build plane. The light engine being "OFF" indicates when the light engine is not irradiating a build plane.

The "Y STAGE" is the Y-mover 30 (FIG. 3). "BP 1" indicates the time period that the light engine 12 is positioned under the first build plane 52 (FIG. 7). Likewise, "BP 2" and "BP 3" indicate light engine 12 being positioned under the second 54 and third 56 build planes respectively. "TRANSIT" indicates a time during which the Y-mover 30 is translating the light engine 12 between positions.

"Z STAGE 1", "Z STAGE 2" and "Z STAGE 3" refer to vertical movement mechanisms 38 (FIGS. 4, 5) of build platforms 16, 18, and 20 respectively. The term "UP" corresponds to a vertical movement mechanism 38 moving a lower face 40 in an upward (+Z) direction. Likewise, the term "DOWN" corresponds to a vertical movement mechanism 38 moving a lower face 40 in an downward (-Z) direction. The term "FIXED" means that the lower face 40 is stationary. As indicated supra, the terms lower face 40 and build surface 40 have the same meaning within the context of this disclosure. With these explanations, we now turn to the method 100 depicted in FIGS. 9 and 10.

According to 102, the 3D printing system 2 is "initialized". The build vessel 22 is filled with photocurable resin and positioned so that build planes 1, 2, and 3 are positioned below and laterally aligned with build surfaces 1, 2, and 3 respectively. Build surface 1 is vertically aligned with build plane 1 above transparent wall 1. Additionally, the light engine 12 is laterally aligned to enable a selective irradiation of build plane 1.

According to 104, the light engine or imager 12 is operated to selectively irradiate the build plane 1 (BP 1). Concurrently with step 104, steps 106 and 108 are in process. According to 106, build surface 2 is moving down toward build plane 2 (BP 2). According to 108, build surface 3 is moving up away from build plane 3 (BP 3). Concurrent with steps 106 and 108 and after step 104, step 110 starts. Step 110 starts after step 104, during which the Y-stage 30 translates the light engine 12 from being under build plane 1 to being under build plane 2. FIG. 10 time increments zero (0) to eight (8) correspond to steps 104-110.

According to 112 - after step 110, the light engine 12 is operated to selectively irradiate build plane 2. Concurrent with step 112, steps 114 and 116 are in process. In step 114, build surface 3 is moving down toward build plane 3. In step 116, build surface 1 is moving up from build plane 1. After step 112, step 118 occurs with the Y-stage translating the light engine 12 from being under build plane 2 to being under build plane 3. FIG. 10 time increments eight (8) to sixteen (16) correspond to steps 112-118.

According to 120 - after step 118, the light engine 12 is operated to selectively irradiate build plane 3. Concurrent with step 120, steps 122 and 124 are in process. In step 122, build surface 1 is moving down toward build plane 1. In step 124, build surface 2 is moving up from build plane 2. After step 120, step 126 occurs with the Y-stage translating the light engine 12 from being under build plane 3 to being under build plane 1 so that the process of steps 104-126 can start over again for another set of layers at build planes 1, 2, and 3. FIG. 10 time increments sixteen (16) to after twenty-two (22) correspond to steps 120-126.

The repetition of steps 104, 112, and 120 involve the alternating accretion of selectively cured photocurable resin 24 at build planes 1, 2, and 3. This unique aspect of method 100 allows up and down motion of build surfaces 1, 2, and 3 to be occurring in parallel with operating and translating the light engine 12 along the Y-axis. The up and down motions of the build surfaces 1, 2, and 3 replenishes the photocurable resin 24 at the build planes 1, 2, and 3 respectively before the selective curing steps. For high viscosity resins in particular, this apparatus and controller programming greatly increases productivity of the light engine 12 in fabricating 3D articles 3.

The illustrated embodiment of the 3D printing system 2 includes three build platforms 16, 18, and 20. However, the anticipated invention includes a plurality of build platforms including two, four, five, or more than five build platforms. Thus, while some claims may recite first and second and even third build platforms, the claims can cover any plurality of build platforms that are consistent with the recited subject matter.

The illustrated embodiment of the 3D printing system 2 includes a use of linear or stepper motors for driving motion of components along various axes. However, it is to be understood that use of a number of different translational components are possible. These can include one or more of linear motors, coil forcer, voice coil, stepper motors, brushless DC motors, ball screws, lead screws, gear train mechanisms, and rack and pinion mechanisms to name a few examples. Combinations of these elements are known in the art for achieving accurate motion along lateral, vertical, and oblique axes.

The specific embodiments and applications thereof described above are for illustrative purposes only and do not preclude modifications and variations encompassed by the scope of the following claims.

## Claims

1. A three-dimensional (3D) printing system configured to manufacture at least first and second 3D articles comprising:
a plurality of mechanical print platforms arranged along a lateral Y-axis including a first build platform and a second build platform;
the first build platform containing photocurable resin between a first build surface and a first transparent wall, a first build plane defined along the first transparent wall;
the second build platform containing photocurable resin between a second build surface and a second transparent wall, a second build plane defined along the second transparent wall;
a light engine;
a controller programmed to:
operate the light engine to selectively irradiate the first build plane and to selectively accrete the photocurable resin onto the first build surface;
translate the light engine along the Y-axis to the second mechanical platform;
operate the light engine to selectively irradiate the second build plane and to selectively accrete the photocurable resin onto the second build surface;
translate the light engine along the Y-axis back to the first mechanical platform; and
repeat operating and translating the light engine to alternately accrete photocurable resin at the first and second build surfaces until the first and second 3D articles are fully fabricated.

2. The three-dimensional (3D) printing system of claim 1 further comprising a third build platform containing a photocurable resin between a third build surface and a third transparent wall, a third build plane defined along the third transparent wall.

3. The three-dimensional (3D) printing system of claim 2 wherein the controller is further programmed to:
after operating the light engine to selectively irradiate the second build plane but before translating the light engine back to the first mechanical platform:
translate the light engine from the second mechanical platform to the third mechanical platform; and
operate the light engine to selectively irradiate the third build plane and to selectively accrete the photocurable resin onto the third build surface.

4. The three-dimensional (3D) printing system of claim 1 wherein concurrent with operating the light engine to selectively irradiate the first build plane the controller is programmed to vertically translate the second build surface toward the second build plane.

5. The three-dimensional (3D) printing system of claim 1 wherein, after operating the light engine to selectively irradiate the first build plane, the controller is programmed to vertically translate the first build surface upward and then downward to replenish photocurable resin along the first build surface.

6. The three-dimensional (3D) printing system of claim 1 further comprising a build vessel having lower bounds for the photocurable resin defined by the first transparent wall and the second transparent wall laterally separated and arranged along the Y-axis.

7. A three-dimensional (3D) printing system configured to manufacture at least first and second 3D articles comprising:
a first build platform including:
a first build plate coupled to a first vertical movement mechanism, a first build surface is defined by a lower face of the build plate or the first 3D article; and
a first transparent wall positioned below the first build plate, a first build plane is defined above the first transparent wall;
a second build platform including:
a second build plate coupled to a second vertical movement mechanism, a second build surface is defined by a lower face of the first build plate or the second 3D article; and
a second transparent wall positioned below the second build plate, a second build plane is defined above the second transparent wall;
a light engine coupled to a lateral movement mechanism;
a controller programmed to:
with the light engine positioned below the first build platform, operate the light engine to selectively irradiate the first build plane;
operate the lateral movement mechanism to translate the light engine to a position below the second build platform;
operate the light engine to selectively irradiate the second build plane;
repeat operating the light engine and the lateral movement mechanism to alternately selectively irradiate the first and second build planes until the first and second 3D articles are fully fabricated; and
concurrent with operating the light engine to selectively irradiate the first build plane, operating the second vertical movement mechanism to vertically translate the second build platform.

8. The three-dimensional (3D) printing system of claim 7 further comprising:
a third build platform including:
a third build plate coupled to a third vertical movement mechanism, a third build surface is defined by a lower face of the third build plate or a third 3D article formed upon the third build plate; and
a third transparent wall positioned below the third build plate, a third build plane is defined above the third transparent wall.

9. The three-dimensional (3D) printing system of claim 8 wherein the controller is configured to:
operate the lateral movement mechanism to translate the light engine to a position below the third build platform;
operate the light engine to selectively irradiate the third build plane.

10. The three-dimensional (3D) printing system of claim 9 further comprising a build vessel having lower bounds for the photocurable resin defined by the first transparent wall, the second transparent wall, and the third transparent wall laterally separated and arranged along a horizontal axis.

11. A three-dimensional (3D) printing system configured to manufacture at first, second, and third 3D articles comprising:
a first build platform including:
a first build plate coupled to a first vertical movement mechanism, a first build surface is defined by a lower face of the build plate or the first 3D article; and
a first transparent wall positioned below the first build plate, a first build plane is defined above the first transparent wall;
a second build platform including:
a second build plate coupled to a second vertical movement mechanism, a second build surface is defined by a lower face of the first build plate or the second 3D article; and
a second transparent wall positioned below the second build plate, a second build plane is defined above the second transparent wall;
a third build platform including:
a third build plate coupled to a third vertical movement mechanism, a third build surface is defined by a lower face of the third build plate or the third 3D article; and
a third transparent wall positioned below the third build plate, a third build plane is defined above the third transparent wall;
a light engine coupled to a lateral movement mechanism;
a controller programmed to:
with the light engine positioned below the first build platform, operate the light engine to selectively irradiate the first build plane;
operate the lateral movement mechanism to translate the light engine to a position below the second build platform;
operate the light engine to selectively irradiate the second build plane;
operate the lateral movement mechanism to translate the light engine to a position below the third build platform;
operate the light engine to selectively irradiate the third build plane;
repeat operating the light engine and the lateral movement mechanism to alternately selectively irradiate the first, second, and third build planes until the first, second, and third 3D articles are fully fabricated.

12. The three-dimensional (3D) printing system of claim 11 wherein, concurrent with operating the light engine to irradiate the first build plane, the controller is programmed to operate the second vertical mechanism to translate the second build plate in a downward direction toward the second build plane.

13. The three-dimensional (3D) printing system of claim 11 wherein, concurrent with operating the light engine to irradiate the first build plane, the controller is programmed to operate the third vertical mechanism to translate the third build plate in an upward direction toward the second build plane.

14. The three-dimensional (3D) printing system of claim 12 wherein, concurrent with operating the light engine to irradiate the first build plane, the controller is programmed to operate the third vertical mechanism to translate the third build plate in an upward direction toward the second build plane.
